(19) **Europäisches Patentamt**
**European Patent Office**
**Office européen des brevets**

(11) **EP 2 224 129 B1**

(12) **EUROPEAN PATENT SPECIFICATION**

(45) Date of publication and mention
of the grant of the patent:
**21.09.2016 Bulletin 2016/38**

(51) Int Cl.:
*F03D 7/04* (2006.01)      *F03D 7/02* (2006.01)
*H02P 9/04* (2006.01)

(21) Application number: **10153278.6**

(22) Date of filing: **11.02.2010**

(54) **Wind turbine control method to dampen vibrations**

**Steuerverfahren einer Windturbine zum Dämpfen von Schwingungen**

**Procédé de commande d'une éolienne pour amortir les vibrations**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **27.02.2009 ES 200900551**

(43) Date of publication of application:
**01.09.2010 Bulletin 2010/35**

(73) Proprietor: **Acciona Windpower S.A.
31621 Sarriguren, Navarra (ES)**

(72) Inventors:
 • **Arlabán Gabeiras, Teresa**
 **31621, Sarriguren (Navarra) (ES)**
 • **Alonso Sádaba, Oscar**
 **31621, Sarriguren (Navarra) (ES)**
 • **Garcia Barace, Alberto**
 **31621, Sarriguren (Navarra) (ES)**
 • **Royo García, Ricardo**
 **31621, Sarriguren (Navarra) (ES)**
 • **Tonks, Stephen**
 **Sarriguren (Navarra), 31621 (ES)**

 • **García Sayés, Jose Miguel**
 **31621, Sarriguren (Navarra) (ES)**
 • **Nuñez Polo, Miguel**
 **31621, Sarriguren (Navarra) (ES)**

(74) Representative: **Pons
Glorieta Ruben Dario 4
28010 Madrid (ES)**

(56) References cited:
 **US-A1- 2006 066 111      US-B2- 7 345 373**

 • **HANSEN ET AL: "Fault ride-through capability of
 DFIG wind turbines", RENEWABLE ENERGY,
 PERGAMON PRESS, OXFORD, GB, vol. 32, no. 9,
 6 March 2007 (2007-03-06), pages 1594-1610,
 XP005916427, ISSN: 0960-1481, DOI:
 10.1016/J.RENENE.2006.10.008**
 • **ANCA D. HANSEN ET AL: "Modelling and control
 of variable-speed multi-pole permanent magnet
 synchronous generator wind turbine", WIND
 ENERGY, vol. 11, no. 5, 1 September 2008
 (2008-09-01), pages 537-554, XP055039493, ISSN:
 1095-4244, DOI: 10.1002/we.278**

**Description**

## OBJECT OF THE INVENTION

The present invention, as expressed in the caption of the present specification, relates to a wind turbine control method and wind turbine, wherein the essential object of the invention is to dampen the vibrations of the transmission system in any situation, even during deep voltage dips.

A second object of the invention is a wind turbine control unit configured to execute said control method.

A third object of the invention is a wind turbine that comprises said control unit.

## FIELD OF APPLICATION

The present specification discloses a wind turbine control method, the method of which is applicable to all types of wind turbines for dampening the vibrations of the transmission system.

## BACKGROUND OF THE INVENTION

As is already known, wind turbines comprise an electric generator and a converter connected to said generator, by means of which generator torque or power is controlled.

Wind turbines also comprise control systems wherein the torque or power instructions are calculated based on turbine operating parameters such as generator rotation speed, power generated or wind speed.

The transmission system, which transmits the torque from the aerodynamic rotor to the rotor of the electric generator, has certain vibration modes due to the moments of inertia and torsional rigidity of the different components. Said vibrations cause fatigue in the mechanical components, particularly in the multiplier, if there is one.

Control systems usually incorporate algorithms wherethrough the torque or power instructions for dampening the vibrations of the transmission system are modified in order to reduce component fatigue.

Patent US 4,453,378 B1 discloses a technique for dampening vibrations in the transmission system that actuates the rotor blades of a helicopter. Said dampening is achieved by subtracting a term calculated based on the rotation speed of the rotor from the engine control signal, thereby generating a torque in counter phase to the oscillations of the transmission system.

Likewise, patent EP 1.007.844 B1 discloses a loop that calculates the torque instruction based on the error between the power generated and the power instruction. A vibration-dampening term calculated by applying a filter to the speed of the generator is subtracted from said instruction.

A further vibration damping control method is shown in "Fault ride-through capability of DFIG wind turbines" by Hansen et al, Renewable Energy, vol.32, no.9, 6 March 2007, Pergamon Press, Oxford.

The described control techniques may be applied to different conversion configurations, both in a doubly fed generator and a full power converter.

The doubly fed generator comprises an induction generator having its stator connected to the electrical grid and the rotor connected to a converter, wherefrom the currents in the generator rotor are controlled, thereby controlling both the torque and the generation of reactive power in the generator.

A configuration with a full power converter is that wherein the stator of a generator, which may be synchronous or asynchronous, is connected to a converter wherethrough all the power generated passes.

Torque and power in a generator are related by the rotation speed of the rotor. In the same manner that controls have been described which generate the torque instructions with the object of dampening the oscillations in the transmission system, controls may be carried out that generate power instructions for the same purpose.

Additionally, in a doubly fed generator the power generated by the stator is a parameter that only differs from the electric torque in one constant.

For that reason, controls based on stator power rather than torque can be carried out.

On the other hand, it is essential to respect the maximum generator and converter currents. For this reason, the converter control units always incorporate current limiters. During a voltage dip the maximum evacuable power decreases in parallel with tension.

According to the state of the art, the torque or power instruction shall contain a transmission system-dampening term that implies a modulation of the same frequency as the oscillations of the transmission system. However, during a voltage dip this instruction cannot be followed due to the obliged limitation in the currents, which causes the effective torque in the generator to be the same as that corresponding to the maximum currents and therefore said dampening term to disappear in said effective torque.

In the state of the art, the consequence is that during a voltage dip, effective generator torque does not have the torque modulation of the torque instruction, which is achieved by means of the dampening term.

## DESCRIPTION OF THE INVENTION

The present specification describes a wind turbine control method by means of which the vibrations of the transmission system are dampened, even in the presence of voltage dips in particular and, in general, in any event that is susceptible to reducing active current generation capacity.

Said method is applied to a wind turbine of variable speed that comprises:

- a rotor,

- a power train coupled to the rotor that transmits mechanical power to an electric generator, and
- a converter connected to said generator, by means of which generator torque or power is controlled, having
- a control unit that calculates the torque or power instructions based on a method that comprises the following steps:

  - calculation of an initial torque or power instruction based on turbine operating state,
  - calculation of a torque or power adjustment term to dampen the vibration modes of the transmission system, and
  - calculation of a final torque or power instruction by applying the adjustment term to the initial instruction.

The method of the invention is characterised in that it also comprises the following steps:

- estimation of the maximum evacuable active power based on electrical grid voltage,
- estimation of the maximum probable value for the adjustment term,
- calculation of a limit value of the initial torque or power instruction based on the maximum evacuable power and said maximum adjustment term value, and
- application of said limit value to the initial torque or power instruction prior to applying the adjustment term for calculating the final instruction, thereby reserving a margin so that the adjustment term dampens the vibrations of the transmission system.

Therefore, as the initial instruction is limited before applying the adjustment term, the final instruction will generally be lower or equal to that corresponding to the maximum evacuable power to the grid. The consequence of this is that, even during a voltage dip, the effective electric torque in the machine will have the torque modulation implied by the adjustment term, maintaining active dampening in the transmission system.

In another aspect of the invention, the maximum probable value for the adjustment term is estimated as the highest of the adjustment values applied in the prior calculation cycles. The adjustment values taken into account to calculate said term comprise a period of time of at least half the period of the main oscillation mode of the transmission system.

In one embodiment of the invention, the adjustment term is a term that is added to the initial instruction in order to calculate the final instruction and, in turn, the limit value of the initial instruction is calculated as the difference between:

- the initial torque or power instruction at which active power substantially equal to the maximum evacuable active power would be generated, and
- the maximum value estimated for the adjustment term.

In this manner, the sum of the initial instruction, once limited, plus the adjustment term gives a final instruction that will not exceed that corresponding to the maximum evacuable power. Therefore, the final torque or power instruction will contain the modulation for dampening the transmission system, even in those situations where the evacuable power is limited by the conditions of the electrical grid.

As can be easily understood, it would be equivalent to calculate the adjustment term with the opposite sign and then subtract said adjustment term from the initial instruction to calculate the final instruction.

During a voltage dip the turbine is normally requested to generate capacitive reactive power to collaborate in the re-establishment of the grid. In the case of voltage surges outside of the grid limits, the situation is similar. It is normal to request the generation of adequate reactive power, in this case inductive, to collaborate in the re-establishment of the voltage.

As previously expounded, the maximum currents cannot be exceeded. Due to this, in another aspect of the invention, maximum evacuable active power is calculated taking into account electrical grid voltage, in addition to the reactive power that must be evacuated to the electrical grid.

It is possible to incorporate a wind turbine or aerogenerator devices that absorb electrical energy, either because they store it or because they consume it, normally in resistors.

In another aspect, the distribution of energy to auxiliary devices disposed in the wind turbine to dissipate or store energy is also taken into account to calculate the maximum evacuable active power. Maximum evacuable active power is increased by the power that can be derived to said auxiliary devices.

In a first alternative of the invention, the electric generator is an induction generator, wherein the converter is connected to the rotor of the electric generator.

In a second alternative of the invention, the electric generator is permanent magnet synchronous or squirrel cage asynchronous, wherein the converter is connected to the generator stator.

A second object of the invention is a wind turbine control unit configured to carry out the previously described control method.

A third object of the invention is a wind turbine that comprises said control unit.

In order to complement the following description and for the purpose of better understanding the characteristics of the invention, the present specification is accompanied by a set of drawings in the figures of which the most characteristic details of the invention are represented in an illustrative and non-limiting manner.

## BRIEF DESCRIPTION OF THE DESIGNS

> Figure 1 shows a view of a doubly fed wind turbine.
> Figure 2 shows a view of a wind turbine with a full power converter.
> Figure 3 shows a schematic view of the control system of the invention.
> Figure 4 shows a schematic view of the control system of the converter.
> Figure 5 shows comparative results charts with a control system according to the state of the art and another according to the invention.

## DESCRIPTION OF A PREFERRED EMBODIMENT

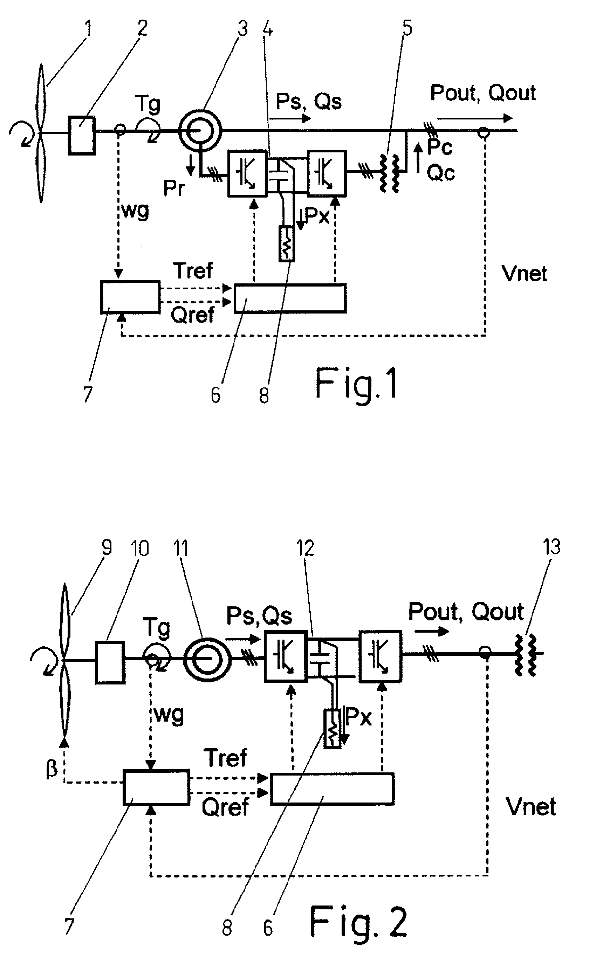

In view of the aforementioned figures and in accordance with the numbering system adopted, we can observe that figure 1 shows a doubly fed wind turbine, in such a manner that a rotor 1 captures wind energy that is transmitted as torque to an induction generator 3. In a preferred embodiment, a gearbox 2 is interposed to provide a rotation speed increase to the generator shaft and reduce the torque. A converter 4 is connected to the generator 3 rotor. The generator 3 stator is directly connected to the electrical grid by connection means.

In a preferred embodiment, the converter 4 is connected to the grid by means of a transformer 5. The generator rotor consumes or generates active power based on its operating point. Total active power (Pout) is the sum of the power generated by the stator (Ps) and the converter output power (Pc). In the same manner, total reactive power (Qout) is the sum of the reactive power generated by the stator (Qs) and that generated by the converter (Qc).

In a similar manner, figure 2 shows a rotor 9 that transmits wind energy to a generator 11, which can be synchronous or asynchronous. In a preferred embodiment, the generator is permanent magnet synchronous or squirrel cage asynchronous. In a preferred embodiment, a gearbox 10 is interposed. An alternative embodiment may be built without a multiplier, dimensioning the generator so as to generate electric power with a generator shaft speed substantially equal to the rotation speed of the rotor 9. A converter 12 is connected to the generator stator 11. In a preferred embodiment, the converter is connected to the grid by means of a transformer 13. In this case, active (Pout) and reactive (Qout) power are the converter outputs.

The coupling between rotor 1, 9 and generator 3, 11 is not completely rigid, due to which the inertia of the different transmission system components and the torsional rigidity of the coupling therebetween gives rise, at least, to a resonance frequency. A control unit 6 controls the converter so as to achieve a torque instruction in the generator (Tref) and a reactive power (Qref) instruction.

In a preferred embodiment, a control unit 7 of the wind turbine or aerogenerator generates the generator torque (Tref) and reactive power (Qref) instructions. Said control unit, based on the information relative to grid voltage (Vnet) and generator shaft speed (wg), generates a torque instruction (Tref) with a modulation of a frequency similar to the oscillations in the transmission system and a signal amplitude such as to dampen said oscillations.

A person skilled in the art can easily design the system so that it works with power instructions rather than torque instructions, as both magnitudes are related by generator shaft rotation speed, which is a known value.

In the case of a doubly fed generator it is particularly advantageous to use stator power instructions, as stator power is equal to the torque multiplied by a constant, said constant being grid frequency multiplied by (2*pi). Therefore, whenever torque instructions are hereinafter described they can be equivalently substituted for power instructions.

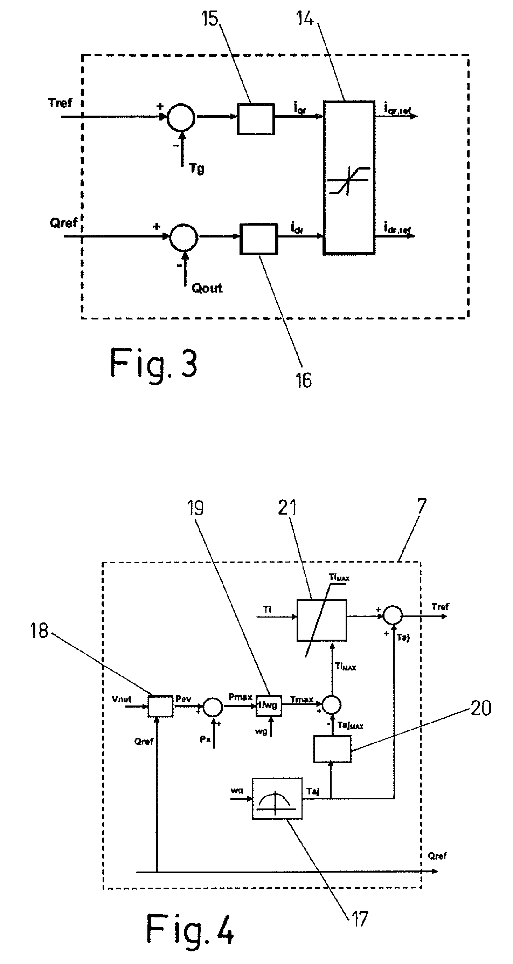

Figure 3 describes part of the converter control unit 6. The torque (Tref) and reactive power (Qref) instructions are transformed into current instructions. In a preferred embodiment, the known vector control technique is used, calculating instructions in axis (d) and (q), (iqr) and (idr), of modules 15 and 16. In a preferred embodiment, modules 14 and 15 are regulators (PI) that calculate the instructions (iqr) and (idr), respectively, based on the error between the torque (Tref) and effective torque instruction in the generator (Tg) and the error between the reactive power (Qref) and generated reactive power (Qs) instruction. Other types of regulators could however be used. Said instructions are subsequently limited in module 14, taking into account the lowest current limit of the generator and converter (Imax), in such a manner that said instructions do not imply a current that exceeds said limit values, fulfilling the following equation:

$$\sqrt{Iqr\_ref^2 + Idr\_ref^2} < \mathrm{Im}\,ax$$

In normal situations, effective generator torque (Tg) is similar to the torque instruction (Tref). However, during a voltage dip the maximum evacuable power decreases in parallel with voltage, as the maximum current (Imax) cannot be exceeded and the power depends on the product of voltage and current. Due to the fact that, in turn, the active power generated is the product of torque (Tg) and shaft speed (wg), without substantial changes in speed, the limitation in evacuable power is equivalent to a limitation in generator torque (Tg).

In this situation, in the state of the art the torque instruction (Tref) could not be achieved, the effective torque (Tg) being substantially smaller than the reference and equal to that resulting from limiting the currents in module 14 to the maximum value (Imax). The final consequence is that, even if torque instruction (Tref) had the modulation resulting from applying the dampening term to the transmission system, the effective torque (Tg) would not have said modulation. Therefore, dampening in the state of the art disappeared during voltage dips or in another situation that limited the capacity to evacuate active power.

Figure 4 shows a detailed view of a wind turbine control unit according to the invention, in such a manner that a module 17 calculates a torque adjustment term (Taj) that is applied to the initial torque instruction (Ti) in order to calculate the torque instruction (Tref). In a preferred embodiment, said adjustment term is calculated based on generator shaft speed (wg). However, said adjustment term could be calculated based on other indicative parameters of the oscillations in the generator transmission system.

In a preferred embodiment, the adjustment term (Taj) is applied to the initial torque instruction (Ti) by means of an addition. Other embodiments are also possible, wherein the adjustment term is calculated with the opposite sign, being applied to the initial instruction by means of a subtraction, or other embodiments wherein the adjustment term (Taj) is applied as a factor that is applied to the initial torque instruction (Ti) by means of a multiplication, thereby achieving the adequate modulation to dampen the oscillations in the transmission system.

In a preferred embodiment, the adjustment term calculation module 17 is a band-pass filter wherein the main resonance frequency of the transmission system is within the active frequency range of said filter, also providing said frequency with the adequate amplitude and phase so that the resulting term (Taj), on being applied to the initial instruction (Ti), dampens the oscillations of the transmission system.

In a preferred embodiment, the maximum evacuable active power (Pev) to the grid based on grid voltage (Vnet) is calculated in a module 18.

In another preferred embodiment, the reactive power reference (Qref) is also taken into account to calculate the maximum evacuable power. In a preferred embodiment, said calculations include the calculation of the reference reactive current (IR_ref) based on the active reference power associated to voltage controls and grid voltage.

$$I_{R\_ref} = \frac{Q_{ref}}{\sqrt{3 \cdot V_{net}}}$$

In a preferred embodiment, the voltage controls directly give the reference reactive current (IR_ref) as the reference, due to the fact that in block 18 the evacuable power (Pev) is calculated based on the grid voltage (Vnet) and the reactive current (IR_ref).

The available active current margin (IA_disp) for torque generation is calculated based on the reactive current (IR_ref) and the current limits of the most restrictive electric device, for example, the generator or converter.

$$I_{A\_disp} = \sqrt{I_{Nom}^2 - I_{R\_ref}^2}$$

In a preferred embodiment wherein the generator is doubly fed, the nominal current (Inom) of the generator is used as a current limit.

In a preferred embodiment wherein the generator is a permanent magnet or squirrel cage generator and the converter is a total power converter, the nominal current (Inom) of the converter is used as a current limit.

The evacuable power (Pev) is calculated based on the active current (IA_disp) and grid voltage (Vnet).

$$P_{ev} = \sqrt{3} \cdot V_{net} \cdot I_{A\_disp}$$

In a preferred embodiment, the maximum torque (Tmax) corresponding to said maximum evacuable power (Pev) is calculated in a module 19.

In a preferred embodiment, the turbine comprises a device 8 that can, at least in a transitory manner, consume electric power (Px). Said electric power may be stored, for example, in batteries or consumed by dissipating it in a resistor or, for example, by generating hydrogen. According to this embodiment, the consumed power (Px) is added to the maximum evacuable power (Pev) to obtain the power (Pmax) based on which the maximum torque (Tmax) that can be obtained in the generator is calculated in the module 19.

In a preferred embodiment, the estimated maximum value (Tajmax) of the adjustment term (Taj) in the next cycles is subtracted from the maximum torque (Tmax), obtaining the limitation value (Timax) of the initial torque instruction (Ti).

In a preferred embodiment, the term (Tajmax) is calculated in a module 20 as the peak value reached by (Taj) in the previous calculation cycles, over a period of time of at least half the oscillation frequency period of the transmission system. The torque modulation amplitude required to dampen the vibrations is estimated in this manner and, therefore, within the maximum available torque (Tmax), in what value must the initial torque instruction (Ti) be limited to reserve sufficient margin for effective dampening.

In a preferred embodiment, the calculated limit (Timax) is applied to the initial torque instruction (Ti) in a module 21. Subsequently, the adjustment term (Taj) for transmission system dampening is applied, finally resulting in the torque instruction (Tref).

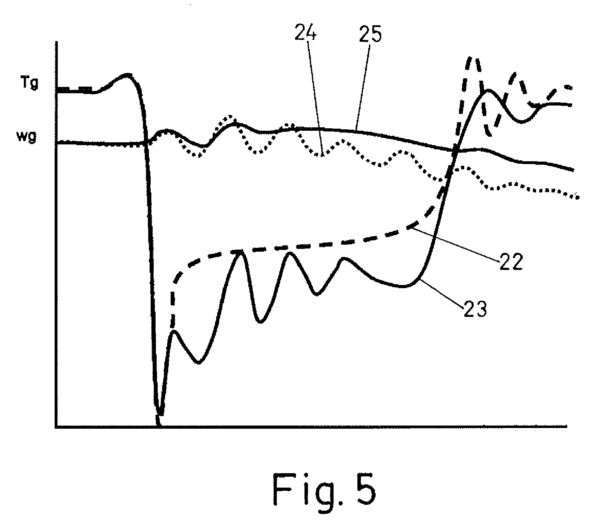

Figure 5 shows a comparison of results with a system according to the state of the art (22 and 24) and with another according to a preferred embodiment of the invention (23 and 25).

With a control system, according to the state of the art, in the event of voltage reduction the generator torque 22 is limited to limiting the currents to the maximum wherein they can circulate through the converter and the generator.

Even if the torque instruction were to have a modulation component to dampen the transmission system, said modulation does not appear until voltage is re-established. Consequently, the oscillations induced in the transmission system, excited by the sudden torque drop, can be observed in generator speed 24. Said oscillations continue until re-establishment of the voltage allows, in the state of the art, initiation of torque 22 modulation to dampen said oscillations. The oscillations in the transmission system produce component fatigue and higher peak speeds in generator speed.

In contrast to the foregoing, with the control system of the invention in the same situation, the torque 23 has the modulation required to dampen the transmission system even when the torque is limited by a grid voltage reduction. This is due to the fact that, as explained earlier, the initial torque is previously limited to the application of the dampening term, in such a manner that the resulting torque is less than the torque corresponding to the maximum currents (and which corresponds to the torque 22 of the state of the art). Consequently, in generator speed 25 an initial oscillation is observed in the transmission system, resulting from the excitation of the vibration mode due to the sudden torque drop; however said oscillation is quickly dampened by the presence of the modulation in the torque 23. In this manner, component fatigue and the maximum generator speed peak are reduced, reducing the risk of stopping due to overspeed.

In a preferred embodiment, the control unit 7 is a programmable device configured to execute the previously described method.

**Claims**

1.  WIND TURBINE CONTROL METHOD, said turbine being of variable speed and comprising:

    • a rotor (1, 9),
    • a power train coupled to the rotor that transmits the mechanical power to an electric generator (3, 11), and
    • a converter (4, 12) connected to the generator, by means of which generator torque or power is controlled, and having
    • a control unit (7) that calculates torque (Tref) or power instructions for the converter based on a method that comprises the following steps:

    - calculation of an initial torque instruction (Ti) or power instruction based on turbine operating state,
    - calculation of a torque (Taj) or power adjustment term to dampen the vibration modes of the transmission system, and
    - calculation of a final torque (Tref) or power instruction by applying the adjustment term to the initial instruction;

    **characterised in that** it also comprises the following steps:

    - estimation of a maximum evacuable active power (Pev) based on an electrical grid voltage (Vnet), being the maximum evacuable active power (Pev) defined as the maximum active power that can be evacuated to the electrical grid.
    - estimation of a maximum probable value for the adjustment term (Tajmax),
    - calculation of a limit value of the initial torque instruction (Timax) or power instruction based on the maximum evacuable power (Pev) and the maximum adjustment term value (Tajmax), and
    - application of said limit value (Timax) to the initial torque (Ti) or power instruction prior to applying the adjustment term (Taj) for calculating the final instruction, thereby reserving a margin so that the adjustment term dampens the vibrations of the transmission system.

2.  WIND TURBINE CONTROL METHOD, according to claim 1, **characterized in that** the maximum evuacuable active power (Pev) is calculated based on an available active current (IA_disp) and the electrical grid voltage (Vnet), according to:

$$P_{ev} = \sqrt{3} \cdot V_{net} \cdot I_{A\_disp}$$

3.  WIND TURBINE CONTROL METHOD, according to claim 2, **characterized in that** the available active current (IA_disp) is calculated based on the reactive current reference (IR_ref).

4.  WIND TURBINE CONTROL METHOD, according to claims 2 or 3, **characterized in that** the available active current (IA_disp) is calculated based on the current limits of the generator or the converter.

5.  WIND TURBINE CONTROL METHOD, according to claim 1, **characterised in that** the maximum probable value for the adjustment term (Tajmax) is estimated as the maximum adjustment value (Taj) applied to the previous calculation cycles.

6.  WIND TURBINE CONTROL METHOD, according to claim 5, **characterised in that** the adjustment term (Taj) is a term that is added to the initial instruction to calculate the final instruction and because the limit value of the initial instruction is calculated as the difference between:

- the initial torque or power instruction (Tmax) at which active power substantially equal to the maximum evacuable active power (Pev) would be generated, and
- the maximum value estimated for the adjustment term (Tajmax).

7. WIND TURBINE CONTROL METHOD, according to any of the preceding claims, **characterised in that**, in addition to electrical grid voltage (Vnet), the reactive power that must be evacuated to the grid (Qref) is also taken into account to calculate the maximum evacuable active power (Pev).

8. WIND TURBINE CONTROL METHOD, according to claim 7, **characterised in that** the distribution of power (Px) to auxiliary devices disposed in the wind turbine to dissipate or store energy is also taken into account to calculate maximum evacuable active power.

9. WIND TURBINE CONTROL METHOD, according to any of the preceding claims, **characterised in that** the electric generator (3) is an induction generator, the converter (4) being connected to the rotor of the electric generator.

10. WIND TURBINE CONTROL METHOD, according to any of claims 1 to 8, **characterised in that** the electric generator (3) is permanent magnet synchronous or squirrel cage asynchronous, the converter (4) being connected to the generator stator.

11. WIND TURBINE CONTROL UNIT that comprises:

- a rotor (1, 9),
- a power train coupled to the rotor that transmits the mechanical power to an electric generator (3, 11), and
- a converter (4, 12) connected to the generator, by means of which generator torque or power is controlled,

**characterised in that** it is configured to calculate a torque (Tref) or power instruction by applying a method, as described in any of the preceding claims.

12. Variable speed WIND TURBINE that comprises:

- a rotor (1, 9),
- a power train coupled to the rotor that transmits the mechanical power to an electric generator (3, 11), and
- a converter (4, 12) connected to the generator, by means of which generator torque or power is controlled,

**characterised in that** it also comprises a control unit (7) configured to calculate a torque (Tref) or power instruction for the converter by applying a method, as described in any of claims 1 to 10.

**Patentansprüche**

1. Steuerverfahren einer Windturbine, wobei diese Turbine eine variable Drehzahl besitzt und Folgendes umfasst:

- einen Rotor (1, 9);
- einen mit dem Rotor gekoppelten Antriebsstrang, der die mechanische Leistung an einen elektrischen Generator (3, 11) überträgt; und
- einen mit dem Generator verbundenen Wandler (4, 12), mit dem das Generatordrehmoment oder die Leistung gesteuert wird, und umfassend
- eine Steuereinheit (7), die das Drehmoment (Tref) oder Leistungsanweisungen für den Wandler beruhend auf einem Verfahren berechnet, das die folgenden Schritte umfasst:

  - Berechnung einer anfänglichen Drehmomentanweisung (Ti) oder Leistungsanweisung beruhend auf dem Betriebszustand der Turbine;
  - Berechnung eines Drehmoments (Taj) oder Leistungsanpassungsausdrucks zur Dämpfung der Schwingungsmodi des Übertragungssystems; und
  - Berechnung eines endgültigen Drehmoments (Tref) oder einer Leistungsanweisung, indem der Anpassungsausdruck auf die anfängliche Anweisung angewandt wird;

**dadurch gekennzeichnet, dass** dieses ebenfalls die folgenden Schritte umfasst:

  - Schätzung einer maximal evakuierbaren Wirkleistung (Pev) beruhend auf einer Stromnetzspannung (Vnet), wobei die maximal evakuierbare Wirkleistung (Pev) als maximale Wirkleistung definiert wird, die an das Stromnetz evakuiert werden kann;
  - Schätzung eines maximal wahrscheinlichen Werts für den Anpassungsausdruck (Tajmax);
  - Berechnung eines Grenzwerts der anfänglichen Drehmomentanweisung (Timax) oder Leistungsanweisung beruhend auf der maximal evakuierbaren Leistung (Pev) und dem Maximalwert des Anpassungsausrucks (Tajmax); und

- Anwendung dieses Grenzwerts (Timax) auf das anfängliche Drehmoment (Ti) oder die anfängliche Leistungsanweisung vor der Anwendung des Anpassungsausdrucks (Taj) zur Berechnung der endgültigen Anweisung, wodurch eine Marge zurückbehalten wird, sodass der Anpassungsausdruck die Schwingungen des Übertragungssystems dämpft.

2. Steuerverfahren einer Windturbine nach Anspruch 1, **dadurch gekennzeichnet, dass** die maximal evakuierbare Leistung (Pev) beruhend auf einem verfügbaren Wirkstrom (IA_dip) und der Stromnetzspannung (Vnet) berechnet wird, laut:

$$P_{ev} = \sqrt{3} \cdot V_{net} \cdot I_{A_{dip}}$$

3. Steuerverfahren einer Windturbine nach Anspruch 2, **dadurch gekennzeichnet, dass** der verfügbare Wirkstrom (IA_disp) beruhend auf der Blindstromreferenz (IR_ref) berechnet wird.

4. Steuerverfahren einer Windturbine nach Anspruch 2 oder 3, **dadurch gekennzeichnet, dass** der verfügbar Wirkstrom (IA_disp) beruhend auf den Stromgrenzen des Generators oder Wandlers berechnet wird.

5. Steuerverfahren einer Windturbine nach Anspruch 1, **dadurch gekennzeichnet, dass** der maximal wahrscheinliche Wert für den Anpassungsausdruck (Tajmax) als maximaler, auf die vorherigen Berechnungszyklen angewandter Anpassungswert (Taj) geschätzt wird.

6. Steuerverfahren einer Windturbine nach Anspruch 5, **dadurch gekennzeichnet, dass** der Anpassungsausdruck (Taj) ein Ausdruck ist, der zur anfänglichen Anweisung hinzugerechnet wird, um die endgültige Anweisung zu berechnen, und weil der Grenzwert der anfänglichen Anweisung berechnet wird als die Differenz zwischen:

- dem anfänglichen Drehmoment oder der anfänglichen Leistungsanweisung (Tmax), bei der eine Wirkleistung erzeugt würde, die im Wesentlichen gleich der maximal evakuierbaren Wirkleistung (Pev) ist; und
- dem für den Anpassungsausdruck (Tajmax) geschätzten Maximalwert.

7. Steuerverfahren einer Windturbine nach einem beliebigen der vorstehenden Ansprüche, **dadurch ge-**

**kennzeichnet, dass** zusätzlich zur Stromnetzspannung (Vnet) ebenfalls die an das Netz zu evakuierende Blindleistung (Qref) berücksichtigt wird, um die maximal evakuierbare Wirkleistung (Pev) zu berechnen.

8. Steuerverfahren einer Windturbine nach Anspruch 7, **dadurch gekennzeichnet, dass** die Verteilung der Leistung (Px) an Nebenvorrichtungen, die in der Windturbine zur Ableitung oder Speicherung von Energie angeordnet sind, ebenfalls berücksichtigt wird, um die maximal evakuierbare Wirkleistung zu berechnen.

9. Steuerverfahren einer Windturbine nach einem beliebigen der vorstehenden Ansprüche, **dadurch gekennzeichnet, dass** der elektrische Generator (3) ein Induktionsgenerator ist, wobei der Wandler (4) mit dem Rotor des elektrischen Generators verbunden ist.

10. Steuerverfahren einer Windturbine nach einem beliebigen der Ansprüche 1 bis 8, **dadurch gekennzeichnet, dass** der elektrische Generator (3) ein Permanentmagnet-Synchrongenerator oder ein Asynchrongenerator mit Kurzschlussläufer ist, wobei der Wandler (4) mit dem Generatorstator verbunden ist.

11. Steuereinheit einer Windturbine, umfassend:

- einen Rotor (1, 9);
- einen mit dem Rotor gekoppelten Antriebsstrang, der die mechanische Leistung an einen elektrischen Generator (3, 11) überträgt; und
- einen mit dem Generator verbundenen Wandler (4, 12), mit dem das Generatordrehmoment oder die Leistung gesteuert wird,

**dadurch gekennzeichnet, dass** diese so konfiguriert ist, ein Drehmoment (Tref) oder eine Leistungsanweisung zu berechnen, indem ein Verfahren wie in einem beliebigen der vorstehenden Ansprüche beschrieben angewandt wird.

12. Windturbine mit variabler Drehzahl, umfassend:

- einen Rotor (1, 9);
- einen mit dem Rotor gekoppelten Antriebsstrang, der die mechanische Leistung an einen elektrischen Generator (3, 11) überträgt; und
- einen mit dem Generator verbundenen Wandler (4, 12), mit dem das Generatordrehmoment oder die Leistung gesteuert wird,

**dadurch gekennzeichnet, dass** diese eine Steuereinheit (7) umfasst, die dazu ausgelegt ist, ein Drehmoment (Tref) oder eine Leistungsanweisung für den Wandler zu berechnen, indem ein Verfahren wie in einem beliebigen der Ansprüche 1-10 beschrieben angewandt wird.

## Revendications

1. Procédé de commande d'une éolienne, où ladite turbine est de vitesse variable et comprend :

   - un rotor (1,9),
   - une transmission accouplée au rotor qui transmet la puissance mécanique à un générateur électrique (3,11), et
   - un convertisseur (4,12) connecté au générateur, au moyen duquel on peut contrôler le couple ou la puissance du générateur, et qui possède
   - une unité de commande (7) qui calcule les instructions de couple (Tref) ou de puissance pour le convertisseur en base à une méthode qui comprend les étapes suivantes :

      - calcul d'une instruction initiale de couple (Ti) ou de puissance en base à l'état de fonctionnement de la turbine,
      - calcul d'une période d'ajustement de couple (Taj) ou de puissance afin de réduire les modes de vibration du système de transmission, et
      - calcul d'une instruction finale de couple (Tref) ou de puissance moyennant l'application de la période d'ajustement à l'instruction initiale ;

   **caractérisé en ce qu'**il comprend également les étapes suivantes :

      - estimation de la puissance active maximale à évacuer (Pev) en base à la tension du réseau électrique (Vnet), la puissance active maximale à évacuer (Pev) étant définie comme la puissance active maximale qui peut être évacuée vers le réseau électrique.
      - estimation d'une valeur probable maximale pour la période d'ajustement (Tajmax),
      - calcul d'une valeur limite de l'instruction initiale de couple (Timax) ou de puissance en base à la puissance maximale à évacuer (Pev) et à la valeur de la période d'ajustement maximale (Tajmax), et
      - application de ladite valeur limite (Timax) à l'instruction initiale de couple (Ti) ou de puissance avant l'application de la période d'ajustement (Taj) pour calculer l'instruction finale, de sorte à maintenir une marge pour que la période d'ajustement amortisse les vibrations du système de transmission.

2. Procédé de commande d'une éolienne, selon la revendication 1, **caractérisé en ce que** la puissance maximale à évacuer (Pev) est calculée en base à un courant actif disponible (IA_disp) et à la tension du réseau électrique (Vnet), conformément à la formule :

$$P_{ev} = \sqrt{3} \cdot V_{net} \cdot I_{A\_disp}$$

3. Procédé de commande d'une éolienne, selon la revendication 2, **caractérisé en ce que** le courant actif disponible (IA_disp) est calculé en base à la référence de courant réactif (IR_ref).

4. Procédé de commande d'une éolienne, selon les revendications 2 ou 3, **caractérisé en ce que** le courant actif disponible (IA_disp) est calculé en base aux limites de courant du générateur ou du convertisseur.

5. Procédé de commande d'une éolienne, selon la revendication 1, **caractérisé en ce que** la valeur maximale probable pour la période d'ajustement (Tajmax) est estimée comme la valeur d'ajustement maximale (Taj) appliquée aux cycles de calcul précédents.

6. Procédé de commande d'une éolienne, selon la revendication 5, **caractérisé en ce que** la période d'ajustement (Taj) est une période qui est ajoutée à l'instruction initiale pour calculer l'instruction finale et compte tenu de la valeur limite de l'instruction initiale calculée comme la différence entre :

   - l'instruction initiale de couple ou de puissance (Tmax) au cours de laquelle se génère la puissance active essentiellement égale à la puissance active maximale à évacuer (Pev), et
   - la valeur maximale estimée pour la période d'ajustement (Tajmax).

7. Procédé de commande d'une éolienne, selon l'une quelconque des revendications précédentes, **caractérisé en ce que**, en plus de la tension du réseau électrique (Vnet), la puissance réactive qui doit être évacuée vers le réseau (Qref) est également prise en compte pour calculer la puissance active maximale à évacuer (Pev).

8. Procédé de commande d'une éolienne, selon la revendication 7, **caractérisé en ce que** la distribution de puissance (Px) vers les dispositifs auxiliaires disposés dans l'éolienne pour dissiper ou stocker l'énergie est également prise en compte pour calculer la puissance active maximale à évacuer.

**9.** Procédé de commande d'une éolienne, selon l'une quelconque des revendications précédentes, **caractérisé en ce que** le générateur électrique (3) est un générateur d'induction, le convertisseur (4) étant connecté au rotor du générateur électrique.

**10.** Procédé de commande d'une éolienne, selon l'une quelconque des revendications 1 à 8, **caractérisé en ce que** le générateur électrique (3) est un générateur synchrone à aimants permanents ou asynchrone à cage, le convertisseur (4) étant connecté au stator du générateur.

**11.** Unité de commande d'une éolienne qui comprend :

- un rotor (1,9),
- une transmission accouplée au rotor qui transmet la puissance mécanique à un générateur électrique (3,11), et
- un convertisseur (4,12) connecté au générateur, au moyen duquel on peut contrôler le couple ou la puissance du générateur,

**caractérisé en ce qu'**il est configuré pour calculer une instruction de couple (Tref) ou de puissance à travers l'application d'une méthode, comme décrit dans l'une quelconque des revendications précédentes.

**12.** Unité de commande d'une éolienne qui comprend :

- un rotor (1,9),
- une transmission accouplée au rotor qui transmet la puissance mécanique à un générateur électrique (3,11), et
- un convertisseur (4,12) connecté au générateur, au moyen duquel on peut contrôler le couple ou la puissance du générateur,

**caractérisé en ce qu'**il comprend également une unité de commande (7) configurée pour calculer une instruction de couple (Tref) ou de puissance pour le convertisseur moyennant l'application d'une méthode, comme décrit dans l'une quelconque des revendications précédentes 1 à 10.

Fig.1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4453378 B1

- EP 1007844 B1

**Non-patent literature cited in the description**

- Fault ride-through capability of DFIG wind turbines. **HANSEN et al.** Renewable Energy. Pergamon Press, Oxford, 06 March 2007, vol. 32